# EUROPÄISCHE PATENTSCHRIFT

(11) **EP 0 916 829 B1**
(45) Veröffentlichungstag und Bekanntmachung des Hinweises auf die Patenterteilung: **01.03.2006**
(21) Anmeldenummer: 98118073.0
(22) Anmeldetag: 24.09.1998
(51) Int. Cl.: F02D 41/38, F02D 41/40, F02D 21/08, F02D 43/00

(54) **Verfahren zum Betreiben eines Dieselmotors**
Method of operation of a diesel engine
Méthode d'opération d'un moteur Diesel

(30) Priorität: 13.11.1997 DE 19750226
(43) Veröffentlichungstag der Anmeldung: 19.05.1999
(60) Teilanmeldung: 05026435.7
(73) Patentinhaber: DaimlerChrysler AG, 70567 Stuttgart (DE)
(72) Erfinder: Digeser, Steffen, 70734 Fellbach (DE); Duvinage, Frank, Dr., 73230 Kirchheim (DE); Fausten, Hans, 73650 Winterbach (DE); Friess, Walter, 70597 Stuttgart (DE); Kerckhoff, Anton, 70374 Stuttgart (DE); Liebscher, Thomas, 70736 Fellbach (DE); Pischinger, Prof. Dr., 52076 Aachen (DE); Stotz, Marco, 70374 Stuttgart (DE)

(56) Entgegenhaltungen:
- EP-A- 0 560 991
- EP-A- 0 740 056
- WO-A-96/36802
- DE-C- 19 543 219
- US-A- 5 960 765
- PATENT ABSTRACTS OF JAPAN vol. 008, no. 166 (M-314), 2. August 1984 (1984-08-02) & JP 59 063333 A (ISUZU JIDOSHA KK), 11. April 1984 (1984-04-11)
- PATENT ABSTRACTS OF JAPAN vol. 1998, no. 05, 30. April 1998 (1998-04-30) & JP 10 018891 A (HITACHI LTD), 20. Januar 1998 (1998-01-20)

## Beschreibung

Die Erfindung betrifft ein Verfahren zum Betreiben eines Dieselmotors mit den Merkmalen des Oberbegriffes des Patentanspruches 1.

Aus der DE 43 34 763 Al ist ein Verfahren zum Betreiben einer Brennkraftmaschine bekannt, wobei in einer Abgasreinigungsanlage eine Adsorbtionseinrichtung für Stickoxide (NOₓ) angeordnet ist. Bei einem Luft-Brennstoff-Verhältnis Lambda (λ), bei dem das in die Adsorbtionseinrichtung einströmende Abgas "mager" ist, das heißt, wenn ein überstöchiometrisches Abgasgemisch mit λ>1 vorliegt, adsorbiert die Adscrbtionseinrichtung NOₓ. Das adsorbierte und auf diese Weise gespeicherte NOₓ wird freigesetzt, wenn das Luft-Brennstoff-Verhältnis Lambda des in die Adsorbtionseinrichtung einströmenden Abgases "fett" wird, das heißt, wenn λ<1 ist bzw. wenn die Verbrennungsabgase in einem unterstöchiometrischen Verhältnis vorliegen. Bei diesem bekannten Verfahren wird die Temperatur der NOₓ-Adsorbtionseinrichtung durch Einspritzen von Brennstoff in das Abgas erhöht und durch Einblasen von Luft in das Abgas gesenkt, um die Arbeitstemperatur der NOₓ₋Speichereinrichtung innerhalb eines festgelegten Bereiches zu halten.

Aus der DE 195 43 219 C1 ist ein Verfahren der eingangs genannten Art bekannt, bei dem ein stromab des Speicherkatalysators angeordneter Sensor zur Erfassung der NOx-Konzentration im Abgasstrom vorgesehen ist, der bei Erreichen eines kennfeldmäßig in Abhängigkeit von Drehzahl und Last variierenden NOx-Speicher-Schwellwertes ein Umschalten von einem Betrieb des Dieselmotors mit einem λ>1 auf einen Betrieb mit λ<1 auslöst. Bei einem Betrieb des Dieselmotors mit λ<1 wird dabei der Speicherkatalysator regeneriert und die Stickoxide NOₓ werden reduziert.

Aus der JP 59063333 ist ein Verfahren zum Betreiben eines Dieselmotors bei verschiedenen Betriebsbedingungen bekannt, wobei unter Berücksichtigung des jeweiligen Fahrzustands auf unterschiedliche Kennfelder für die Kraftstoffeinspritzung zurückgegriffen wird. Dadurch kann die Schwarzrauchbildung unterdrückt und die Startfähigkeit des Motors verbessert werden.

Aus der US 5 960 765 A ist ein Betriebsverfahren für eine funkengezündete Brennkraftmaschine bekannt, bei welchem unterschiedliche Kraftstoffeinspritzbedingungen gewählt werden. Je nach aktuellem Betriebszustand erfolgt die Kraftstoffeinspritzung im Ansaugtakt oder im Kompressionstakt, wobei verschiedene Betriebsparameter wie Einspritzmenge, Zündzeitpunkt und Abgasrückführmenge entsprechend angepasst werden. Zur Steuerung des Brennkraftmaschinenbetriebs ist eine Rechnereinheit vorgesehen, welche auf unterschiedliche Kennfelder zugreift.

Die vorliegende Erfindung beschäftigt sich mit dem Problem, ein Verfahren der eingangs genannten Art dahingehend auszugestalten, daß der NOₓ-Speicher- und Regenerationsprozeß eines von den Abgasen eines Dieselmotors durchströmten Speicherkatalysators und das Betriebsverhaltens des Dieselmotors insbesondere während des Regenerationsprozesses verbessert wird. Dieses Problem wird erfindungsgemäß durch ein Verfahren mit den Merkmalen des Patentanspruches 1 gelöst. Die Merkmale de-Unteransprüche geben vorteilhafte Aus- und Weiterbildungen der Erfindung an.

Die Erfindung beruht auf dem allgemeinen Gedanken, sowohl für den Mager-Betrieb als auch für den Fett-Betrieb des Dieselmotors separate Kennfelder bzw. separate Kennfeldgruppen vorzusehen, wodurch eine an das jeweilige Betriebsverhalten optimal angepaßte Motorabstimmung erzielt werden kann. Obwohl eine zur Bildung von reduzierendem Abgas notwendige unterstöchiomentrische Verbrennung (λ<1) im Dieselmotor während des Fett-Betriebes eine gegenüber dem Mager-Betrieb völlig geänderte Motorabstimmung, insbesondere hinsichtlich der Frischluftzufuhr und des Kraftstoffeinspritzvorganges, erforderlich macht, ist es mit Hilfe speziell ausgearbeiteter Kennlinien möglich, auch für den Fett-Betrieb ein zweckmäßiges und vorteilhaftes Betriebsverhalten für einen Dieselmotor zu gewährleisten. Beispielsweise ist es möglich, die Motorabstimmung derart auszugestalten, daß die Rußemissionswerte in akzeptablen Bereichen bleiben, wobei insbesondere kein sichtbarer Rauchausstoß stattfindet. Ebenso ist es möglich, mit Hilfe spezieller Kennfelder das Betriebsverhalten des Dieselmotors derart abzustimmen, daß der Fahrer und andere Fahrzeuginsassen das Umschalten zwischen den verschiedenen Betriebsphasen bzw. das Vorhandensein verschiedener Betriebsphasen nicht als störend empfinden bzw. erst gar nicht bemerken. Ein in dieser Hinsicht wichtiger Aspekt ist die Laufruhe des Dieselmotors, die mit Hilfe speziell ausgearbeiteter Kennlinien auch im Fett-Betrieb in akzeptablen Bereichen gehalten werden kann.

Um einen Fett-Betrieb des Dieselmotors zu erhalten, während dem ein dem Dieselmotor nachgeschaltetes Adsorbersystem regeneriert wird, kann der Dieselmotor beispielsweise mit einer im Vergleich zum Mager-Betrieb erhöhten Kraftstoffzufuhr betrieben werden.

Entsprechend einer bevorzugten Ausführungsform des erfindungsgemäßen Verfahrens sind zu diesem Zweck die Kennfelder für den Fett-Betrieb des Dieselmotors so gewählt, daß im Vergleich zum Mager-Betrieb die Treibstoff-Verbrennung in der jeweiligen Brennkammer erst relativ weit nach dem oberen Totpunkt des jeweiligen Kolbens, das heißt bei relativ großen Kurbelwellenwinkeln stattfindet. Die Kraftstoff-Verbrennung bei Dieselkraftstoffen setzt sich aus einer Vorverbrennung (Vorgemischverbrennung) und aus einer Hauptverbrennung (Diffusionsverbrennung) zusammen. Hier betrifft die späte verbrennung im wesentlichen die diffuse Phase der Kraftstoffverbrennung. Da die Kraftstoffverbrennung erst spät stattfindet, kann sie nicht mehr vollständig ablaufen, so daß schon aus diesem Grund das Verbrennungsluftverhältnis Lambda herabgesetzt wird. Mit Hilfe dieser Maßnahme wird aber auch der Wirkungsgrad des Motors derart verschlechtert, daß deutlich höhere Kraftstoffmengen benötigt werden, um die gleiche Motorleistung wie im Mager-Betrieb erreichen zu können. Da bei einer gleichbleibenden Frischluftzufuhr die in dieser Phase vorhandene größere Treibstoffmenge teilweise nicht mehr verbrannt werden kann, wird ebenfalls das Verbrennungsluftverhältnis Lambda herabgesetzt und der Dieselmotor wird fett betrieben.

Der Zeitpunkt, zu dem die Diffusionsverbrennung des Kraftstoffes stattfindet, kann entsprechend einer Weiterbildung des erfindungsgemäßen Verfahrens durch den Zeitpunkt, zu dem die Kraftstoffhaupteinspritzung beginnt und/oder durch die Einspritzdauer und/oder durch die Einspritzmenge und/oder durch den Einspritzdruck beeinflußt werden. Beispielsweise wird durch einen späten Einspritzbeginn nur ein Teil der eingespritzten Kraftstoffmenge vollständig verbrannt, während der Rest der eingespritzten Kraftstoffmenge im wesentlichen aufbereitet, d.h. die langkettigen Kraftstoffmoleküle werden zu kurzkettigen Molekülen aufgebrochen ("gecracked"), und oxidiert wird. Dies führt bei diesem fetten Motorbetrieb zu einer stark erhöhten Emission an unverbrannten Kohlenwasserstoffen (HC) und Kohlenmonoxid (CO). Diese wunschgemäß erzielten Reaktionsprodukte HC und CO dienen auf Adsorberoberflächen als Reduktionsmittel zur Umsetzung von Stickoxyden NOₓ zu Stickstoff K₂. Somit weisen die Abgase bei einem fetten Motorbetrieb die zur Regeneration des Adsorbersystems notwendige reduzierende Atmosphäre auf.

Bei einer geeigneten Abstimmung der Einspritzparameter wie Beginn, Dauer, Menge, Druck, kann der Kraftstcffanteil, der an der Entfaltung der Motorleistung nicht beteiligt ist, das heißt der Kraftstoffanteil, der die reduzierende Atmosphäre im Abgas ausbildet, in einem begrenzten Bereich nahezu ohne Einfluß auf die Motorleistung variiert werden. Dies hat zur Folge, daß der Dieselmotor in diesem Bereich des Fett-Betriebes etwa die gleiche Leistung wie in dem entsprechenden Mager-Betrieb liefert. Der Wechsel zwischen den Betriebsarten kann somit vom Fahrer unbemerkt erfolgen. Gleichzeitig ermöglicht der obengenannte Bereich, in dem die eingespritzte Kraftstoffmenge nahezu ohne Motorleistungsveränderung variiert werden kann, eine gezielte Beeinflussung der Abgaszusammensetzung, insbesondere die Einstellung der Reduktionsmittelmenge auf eine gewünschte oder auf eine im jeweiligen Betriebspunkt erforderliche Größe. Ebenfalls kann durch die geeignete Wahl der Einspritzparameter, insbesondere durch den Einspritzbeginn und deren Dauer, das Verhältnis von Kohlenwasserstoffen zu Kohlenmonoxid in einer vorbestimmten Weise eingestellt werden.

Zur Verbesserung der Motorabstimmung kann entsprechend einer zweckmäßigen Ausgestaltung des erfindungsgemäßen Verfahrens vor der Kraftstoffhaupteinspritzung eine Kraftstoffvoreinspritzung erfolgen, die im Vergleich zum Mager-Betrieb hinsichtlich Einspritzbeginn und/oder Einspritzdauer verändert ist. Die Kraftstoffvorverbrennung hat ebenfalls Einfluß auf das Betriebsvemalten des Dieselmotors. Da es beim erfindungsgemäß vorgeschlagenen Betrieb des Dieselmotors mit sehr später Kraftstoff-Hauptverbrennung zu Vibrationen, insbesondere zu einem unruhigen Motorlauf kommen kann, wird die Voreinspritzung bei einer zweckmäßigen Ausgestaltung des erfindungsgemäßen Verfahrens hinsichtlich Einspritzbeginn und Einspritzdauer dahingehend auf die verzögerte Haupt- oder Diffusionsverbrennung abgestimmt, daß im wesentlichen wieder ein gleichmäßiger, ruhiger Motorlauf gewährleistet werden kann.

Mit den vorgenannten Maßnahmen zur Verzögerung der Kraftstoffhaupteinspritzung wird im wesentlichen die Diffusionsverbrennung beeinflußt.

Bei einer anderen, besonders vorteilhaften Ausführungsform des erfindungsgemäßen Verfahrens wird der Zeitpunkt für den Beginn der Kraftstoffhaupteinspritzung derart spät gewählt, daß sich bei einem Dieselmotor mit einer Abgasrückführung in Betriebspunkten mit einer relativ hohen Abgasrückführungsrate eine Vorgemischverbrennung einstellt. Dabei wird der Einspritzzeitpunkt vorzugsweise so gewählt, daß die Diffusionsverbrennung im überwiegenden Maße in eine Vorgemischverbrennung umschlägt. Diese Umstellung von Diffusionsverbrennung auf Vorgemischverbrennung erfolgt, da bei der sehr spät einsetzender Diffusionsverbrennung relativ große Mengen unverbrannter Kohlenwasserstoffe entstehen, von denen ein großer Teil über die Abgasrückführung zusammen mit Frischluft erneut den Brennräumen des Motors zugeführt wird. Infolge der dort stattfindenden Kompression kommt es dabei zu einem sehr guten homogenisierten Gemisch, das bei Erreichen der Zündgrenze noch weit vor dem oberen Totpunkt des jeweiligen Kolbens zu einer Vorgemischverbrennung führt. Dabei können ebenfalls Verbrennungsluftverhältnisse von λ<1 realisiert werden.

Entsprechend einer zweckmäßigen Weiterbildung kann bei einem solchen Einspritzverhalten, bei dem die vollständige Diffusionsverbrennung in eine überwiegende Vorgemischverbrennung umschlägt, zusätzliches Reduktionsmittel durch eine späte Kraftstoffnacheinspritzung erzeugt werden. Dabei wird der sehr spät nachgespritzte Kraftstoff im wesentlichen nur noch verdampft und, wenn überhaupt, nur zu einem geringen Anteil gecrackt und/oder verbrannt. Der verdampfte Kraftstoff dient im Abgas als zusätzliches, innermotorisch erzeugtes Reduktionsmittel, das zur Regeneration des Adsorbersystems verwendet werden kann.

Bei einer anderen vorteilhaften Ausführungsform des erfindungsgemäßen Verfahrens kann nach der Kraftstoffhaupteinspritzung eine Kraftstoffnacheinspritzung erfolgen, die insbesondere hinsichtlich Beginn, Dauer, Menge derart gewählt ist, daß in der Brennkammer im wesentlichen nur ein Aufbereiten, insbesondere ein Cracken des nacheingespritzten Kraftstoffes stattfindet. Auf diese Weise kann zusätzliches Reduktionsmittel in Form von Kohlenwasserstoffen HC in den Abgasen für die Regeneration des Katalysators bereitgestellt werden. Mit Hilfe dieser Maßnahme ist es einerseits möglich, das Verbrennungsluftverhältnis Lambda in gewünschter Weise zu variieren, andererseits kann durch eine gezielt eingesetzte Kraftstoffnacheinspritzung die Adsorber- bzw. Katalysatoroberfläche aufgrund einer dort stattfindenden exothermen Reaktion geheizt werden. Die Leistungsentfaltung des Dieselmotors soll dabei durch den nacheingespritzten Kraftstoff nicht beeinflußt werden.

Eine weitere Möglichkeit, einen Fett-Betrieb des Dieselmotors zu erhalten, wird bei einer anderen Ausführungsform des erfindungsgemäßen Verfahrens dadurch erzielt, daß das Kennfeld eine Vorgemischverbrennung zu einem Zeitpunkt vorsieht, der im Vergleich mit dem Mager-Betrieb relativ weit vor dem oberen Totpunkt des jeweiligen Kolbens liegt. Eine frühe Vorgemischverbrennung läßt sich insbesondere durch einen im Vergleich zum Mager-Betrieb frühen Beginn der Kraftstoffvoreinspritzung realisieren.

Um ein reduzierend wirkendes Abgas zu erhalten, können anstelle oder zusätzlich zu den oben beschriebenen Maßnahmen, mit denen der Verbrennung eine gegenüber dem Mager-Betrieb erhöhte Kraftstoffmenge zugeführt wird, auch Maßnabmen angewandt werden, bei denen der Verbrennung eine im Vergleich zum Mager-Betrieb verringerte Frischluftmenge zugeführt wird.

Bei einer zweckmäßigen Ausführungsform des erfindungsgemäßen Verfahrens kann zu diesem Zweck im Fett-Betrieb aufgrund entsprechend ausgebildeter Kennfelder der Einlaßquerschnitt im Ansaugtrakt jedes einzelnen Zylinders verringert werden. Dies kann insbesondere dadurch realisiert werden, daß im Ansaugbereich des jeweiligen Brennraumes eine Drosselklappe vorgesehen ist, die über ein Stellglied von einem hilfskraftbetätigten Stellantrieb betätigbar ist. Dieser Stellantrieb wird dabei in Abhängigkeit von Signalen der Motorregelung kennfeldmäßig gesteuert.

Eine wichtige Kenngröße für die Frischluftzufuhr ist das Spülgefälle. Das ist die Druckdifferenz zwischen dem Gasdruck, der auf der Austrittsseite der Zylinder herrscht - Abgasgegendruck - und dem Gasdruck, der auf der Eintrittsseite der Zylinder herrscht - Saugrohrdruck -. Bei einem Dieselmotor mit einer Abgasrückführungseinrichtung wirkt sich die Abgasrückführungsrate auf die Frischluftzufuhr dahingehend aus, daß eine erhöhte Abgasrückführungsrate eine verringerte Frischluftzufuhr zur Folge hat. Bei einer besonders vorteilhaften Ausführungsform des erfindungsgemäßen Verfahrens kann in den Kennfeldern für den Fett-Betrieb des Dieselmotors vorgesehen sein, das Spülgefälle zu erhöhen. Da die Abgasrückführungsleitung mit einer Abgassammelkammer nach den Zylinder kommuniziert, weist das Abgas in der Abgasrückführung im wesentlichen ebenfalls den Abgasgegendruck auf. Folglich bewirkt ein erhöhtes Spülgefälle einen Anstieg der Abgasrückführungsrate und somit eine Reduzierung der Frischluftzufuhr, was den gewünschten Effekt eines verringerten Verbrennuncsluftverhältnisses Lambda zur Folge hat.

Um das Spülgefälle zu erhöhen, schlägt eine andere Ausführungsform des erfindungsgemäßen Verfahrens vor, bei einem Dieselmotor mit einer Abgasrückführung die Frischluftzufuhr vor deren Durchmischung mit dem Abgasrückführungsstrom zu drosseln. Dabei verringert sich der Druck im Saugrohr und das Spülgefälle steigt. Dies hat zur Folge, das bei Gleichem Abgasrückführungsventil-Öffnungsquerschnitt die dem Motor über die Abgasrückruhrung zugeführte Abgasmenge, das heißt die Abgasrückführungsrate, erhöht wird.

Bei einer anderen Ausführungsform des erfindungsgemäßen Verfahrens kann das Spülgefälle zwischen Abgasgegendruck und Saugrohrdruck auch dadurch erhöht werden, daß der Abgasgegendruck, beispielsweise durch eine Drossel, erhöht wird. Insbesondere ist es bei einem Dieselmotor mit einem Abgasturbolader möglich, den Turbineneintrittsquerschnitt und/oder das durch den Abgasturbolader durchströmende Abgasvolumen zu verringern. Zu diesem Zweck können wiederum Stellglieder vorgesehen sein, die von einem hilfskraftbetätigtem Stellantrieb in Abhängigkeit von Signalen der Motorregelung, insbesondere Kennfeld gesteuert betätigbar sind.

Weitere wichtige Merkmale und Vorteile ergeben sich aus den Unteransprüchen, den Zeichnungen und aus der nachfolgenden Figurenbeschreibung eines bevorzugten Ausführungsbeispieles anhand der Zeichnungen. Es zeigen, jeweils schematisch,
- Fig. 1: eine Anordnung eines Dieselmotors mit Abgasrückfübrung, Abgasturbolader und einer Motorsteuerung nebst zugehörigen Leitungen, die einzelne Aggregate mit der Motorsteuerung verbinden, und
- Fig. 2: einen Aufbau einer Motorsteuerung mit einem separate Kennfelder enthaltenden Speicher.

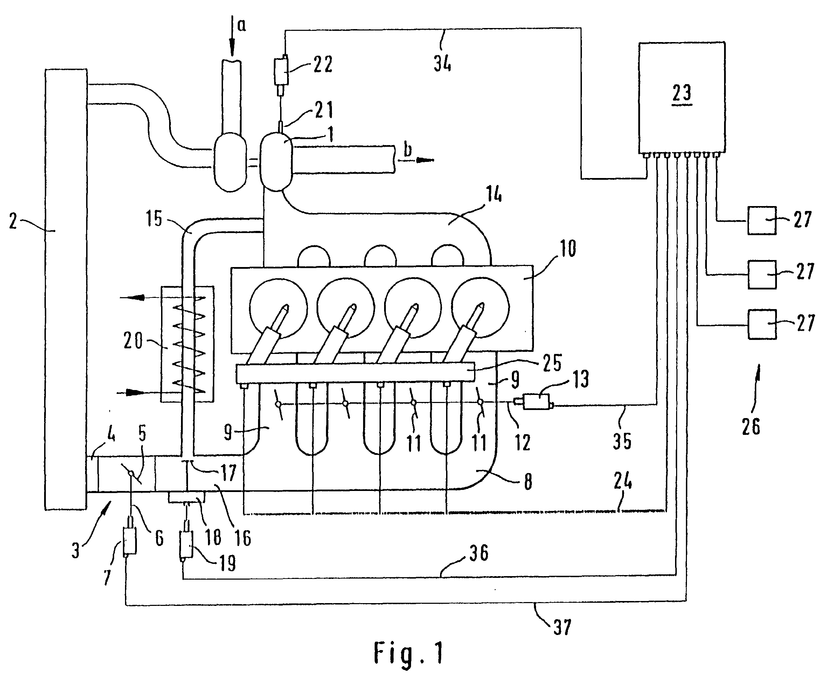

Entsprechend Fig. 1 saugt ein Abgasturbolader 1 auf seiner Verdichtereintrittsseite Frischluft entsprechend dem Pfeil a an. Diese durchströmt bei entsprechend erhöhtem Druck einen Wärmetauscher 2 und erreicht eine Drosselstelle 3 in der Ansaugleitung 4.

In der Drosselstelle 3 ist eine Drosselklappe 5 angeordnet, die über ein Stellglied 6 von einem hilfskraftbetätigten Stellantrieb 7 betätigbar ist. Nach der Drosselstelle 3 durchquert die Frischluft zunächst ein Saugrohr 16 und erreicht dann eine Luftsammelkammer 8, von wo aus sie über separate Ansaugtrakte 9 den Brennbereichen des Dieselmotors 10 zugeführt wird. In den Ansaugtrakten 9 sind jeweils einzelne Drosselklappen 11 angeordnet, die entsprechend dem Ausführungsbeispiel über ein gemeinsames Stellglied 12 von einem hilfskraftbetätigten Stellantrieb 13 betätigbar sind.

Stromab des Motors 10 werden die während der Verbrennung gebildeten Abgase in einer Abgassammelkammer 14 gesammelt und zum Teil der Turbineneintrittsseite des Abgasturboladers 1 zugeführt. Außerdem kommuniziert die Abgassammelkammer 14 mit einer Abgasrückführungsleitung 15, die im Saugrohr 16, das heißt nach der Drosselstelle 3 und vor der Luftsammelkammer 8 in der Luftansaugleitung 4 mündet.

Im Mündungsbereich der Abgasrückführungsleitung 15 ist im Saugrohr 16 ein Ventil 17 angeordnet, daß über ein Stellglied 18 von einem hilfskraftbetätigten Stellantrieb 19 betätigbar ist. Im dargestellten Ausführungsbeispiel steht die Abgasrückführungsleitung 15 mit einem Wärmetauscher 20 im Wärmeaustausch, so daß ggf. eine Kühlung des rückgeführten Abgases erreicht werden kann.

Der Turbineneintrittsquerschnitt und/oder der die Turbine durchströmende Abgasvolumenstrom ist mit Hilfe eines Stellgliedes 21 veränderbar, daß von einem hilfskraftbetätigten Stellantrieb 22 betätigbar ist. Nach dem Durchströmen der Turbine des Abgasturboladers 1 wird das Abgas entsprechend dem Pfeil b einem im übrigen nicht dargestellten Adsorbersystem zugeleitet.

Der Dieselmotor 10 wird von einer Motorsteuerung oder Motorregelung 23 gesteuert bzw. geregelt, wozu diese über Leitungen mit den entsprechenden Aggregaten des Dieselmotors 10 verbunden ist. Beispielsweise ist in der Fig. 1 eine Leitung 24 dargestellt, welche die Motorregelung 23 mit einer Einspritzanlage 25 des Dieselmotors 10 verbindet. Weitere Leitungen 34, 35, 36 und 37 verbinden die Motorregelung 23 mit den Stellantrieben 22, 13, 19 und 7. Darüber hinaus ist die Motorregelung 23 mit einer Sensorik 26 verbunden, deren Sensoren 27, die für den Betrieb des Dieselmotors 10 notwendigen Parameter detektieren, wobei beispielhaft nur drei Sensoren 27 dargestellt sind.

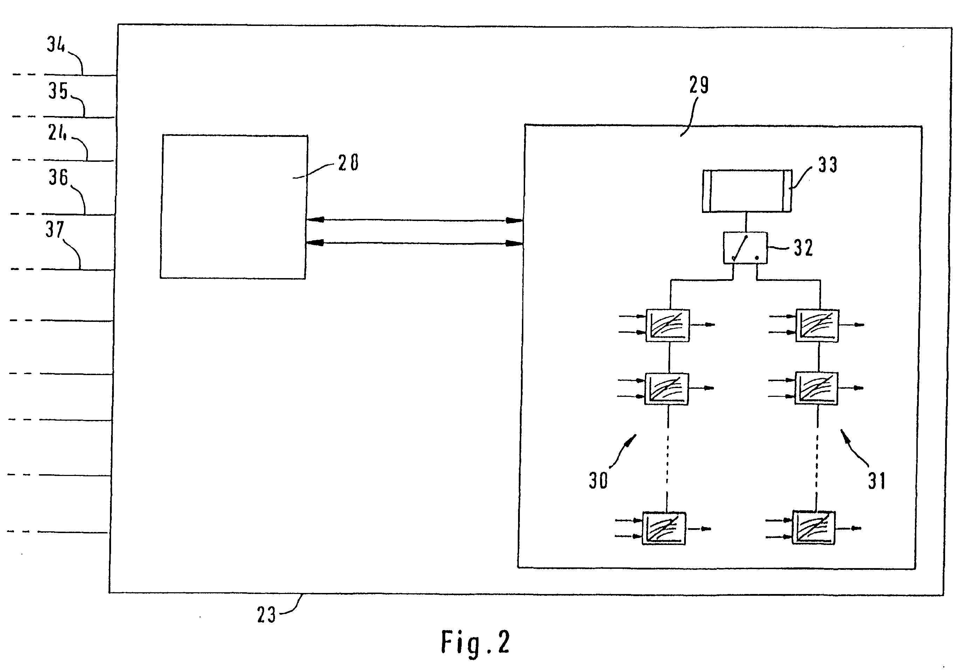

Entsprechend Fig. 2 enthält die Motorregelung 23 einen Rechner 28 sowie einen damit kommunizierenden Speicher 29. In Speicher 29 sind die für den Betrieb des Dieselmotors 10 erfoderlichen Kennfelder, z.B. ein lastabhängiges Kennfeld für die Steuerung der Einspritzanlage 25 etc., gespeichert. Erfindungsgemäß sind dabei Kennfelder 30 für den Mager-Betrieb des Dieselmotors 10 und davon unabhängige, separate Kennfelder 31 für den Fett-Betrieb des Dieselmotors 10 vorgesehen. Auf welche Gruppe von Kennfeldern 30 oder 31 der Rechner 28 der Motorregelung 23 zugreifen kann, wird über einen Softwareschalter 32 festgelegt, dessen Schaltstellung sich anhand von im Speicher 29 abgespeicherten Umschaltkriterien 33 bestimmt wird. In der dargestellten Schaltstellung arbeitet der Dieselmotor 10 dementsprechend im Magerbetrieb. Die Umschaltkriterien 33 werden ihrerseits vom Rechner 28 anhand der von den Sensoren 27 der Sensorik 26 generierten Signale überwacht. Bei Erfüllung der vorbestimmten Umschaltkriterien 33 für ein Umschalten von Mager- auf Fett-Betrieb wird der integrierte Softwareschalter 32 von der dargestellten Stellung für den Mager-Betrieb auf die andere Stellung umgeschaltet, bei der ein Zugriff auf die Kennfeldgruppe der für den Fett-Betrieb des Dieselmotors 10 zuständigen Kennfelder 31 ermöglicht wird.

Um einen unterstöchiometrischen Betrieb des Motors 10, das heißt einen Betrieb mit einem Verbrennungsluftverhältnis von λ<1 zu ermöglichen, wird über die zugehörigen Kennfelder 31 die Motorregelung 23 dahingehend verändert, daß die Frischluftzufuhr zu den Brennräumen reduziert und alternativ oder zusätzlich der Dieselmotor 10 eine gegenüber der mageren Verbrennungsbetrieb deutlich erhöhte Kraftstoffmenge zugeführt wird.

Um die Kraftstoffmenge zu erhöhen, können verschiedene Maßnahmen durchgeführt werden, die im wesentlichen an die Betriebsparameter des Einspritzprozesses gekoppelt sind. Die entsprechenden Kennfelder 31 für den Fett-Betrieb bewirken dabei über die Motorregelung 23 eine Beeinflussung der Einspritzanlage 25.

Beispielsweise kann der Einspritzbeginn der für die Realisierung der im jeweiligen im Betriebspunkt des Motors 10 erforderlichen Motorlast notwendigen Kraftstoffmenge in Richtung später Kurbelwellenwinkel, das heißt weit nach dem oberen Totpunkt des jeweiligen Kolbens, verschoben werden. Um bei einem auf diese Weise erheblich verschlechterten Wirkungsgrad die gleiche Motorleistung erhalten zu können, muß eine deutlich höhere Kraftstoffmenge eingespritzt werden, mit der Folge, daß das Verbrennungsluftverhältnis Lambda herabgesetzt wird. Die durch die unvollständige Verbrennung gebildeten Kohlenwasserstoffe HC und das Kohlenmonoxid CO schaffen eine reduzierende Atmosphäre im Abgasstrom b, die zur Regenerierung des Adsorber-Katalysators verwendet werden kann. Zusätzlich oder alternativ dazu kann der Einspritzdruck variiert werden, um dadurch ebenfalls die Zusammensetzung der Abgase zu beeinflussen.

Ebenfalls zusätzlich oder alternativ kann die Voreinspritzung hinsichtlich Einspritzlage und Einspritzverlauf verändert werden, wodurch ein ggf. durch die späte Haupteinspritzung entstehender unrunder, unruhiger Motorlauf ausgeglichen werden kann.

Darüber hinaus kann zusätzlich oder alternativ eine Kraftstoff-Nacheinspritzung zum Einsatz kommen, wobei der nacheingespritzte Kraftstoff die Leistung des Dieselmotors 10 nicht beeinflußt, diese insbesondere nicht steigert. Denn die Nacheinspritzung erfolgt zu einem derart späten Zeitpunkt, daß der nachgespritzte Kraftstoff nur noch aufbereitet, das heißt gecrackt wird, wodurch zusätzliches Reduktionsmittel in Form kurzkettiger Kohlenwasserstoffe HC für die Regeneration des Katalysators bereitgestellt wird. Neben der Beeinflussung des Verbrennungsluftverhältnisses Lambda kann durch die Kraftstoff-Nacheinspritzung außerdem die Temperatur auf der zu regenerierenden Katalysatoroberfläche beeinflußt werden. Eine gezielt eingesetzte Kraftstoff-Nacheinspritzung bewirkt dabei ein Heizen der Katalysatoroberfläche.

Bei einem Dieselmotor 10 entsprechend Fig. 1, der eine Abgasrückführung 15 aufweist, kann auf besonders zweckmäßige Art und Weise eine unterstöchiometrische Verbrennung (λ<1) erzielt werden, in dem der Einspritzzeitpunkt für die Kraftstoffhaupteinspritzung extrem spät gewählt wird. Denn bei einem bestimmten späten Einspritzzeitpunkt schlägt die vollständige Diffusionsverbrennung in eine überwiegende Vorgemischverbrennung um. Da bei der sehr spät einsetzenden Einspritzung ein großer Teil des Kraftstoffes nicht oder nur unvollständig verbrannt werden kann, gelangt ein entsprechend großer Anteil nicht verbrannter Kohlenwasserstoffe über die Abgasrückführung in den Brennraum zurück. Dort kommt es infolge der durch den aufsteigenden Kolben verursachten Kompression zu einem sehr guten homogenisierten Gemisch, das weit vor dem oberen Totpunkt des Kolbens die Zündgrenze erreicht und zu einer hauptsächlichen Vorgemischverbrennung führt. Die dadurch erreichte Vorgemischverbrennung führt dann ebenfalls zu dem Verbrennungsluftverhältnis von λ<1. Um zusätzliche Reduktionsmittel im Abgasstrom b zu halten, kann außerdem eine späte Kraftstoffnacheinspritzung durchgeführt werden, wobei der dann im wesentlichen nur noch verdampfende Kraftstoff selbst als innermotorisch erzeugtes Reduktionsmittel dient.

Da der Einspritzzeitpunkt, bei dem ein Umschlagen von Diffusionsverbrennung in Vorgemischverbrennung stattfindet von dem jeweiligen Betriebszustand des Dieselmotors 10 abhängt, wird ein derartiger Betrieb des Dieselmotors 10 zweckmäßigerweise mit speziell dazu angelegten Kennfeldern 31 durchgeführt.

Das Verbrennungsluftverhältnis Lambda kann bei entsprechend ausgelegten Kennfeldern 31 auch dadurch verringert werden, daß die dem Motor 10 zugeführte Frischluftmasse verringert wird. Die nachfolgend beschriebenen Maßnahmen zur Reduzierung der für die Verbrennung zur Verfügung stehenden Frischluftmasse können alternativ oder zusätzlich zu den vorangehend beschriebenen Maßnahmen zur Steigerung der der Verbrennung zugeführten Kraftstoffmenge ausgeführt werden.

Durch die Kennfelder 31 für den Fett-Betrieb veranlaßt, kann die Motorregelung 23 über die Verbindungsleitung 35 den Stellantrieb 13 dahingehend steuern, daß dieser über das Stellglied 12 die Drosselklappen 11 derart verstellt, daß diese den jeweiligen Einlaßquerschnitt im Ansaugtrakt 9 der jeweiligen Zylinder reduzieren. Auf die Weise wird der Querschnitt für die Luftzufuhr aus der Luftsammelkammer 8 variabel verringert, so daß dem Motor 10 insgesamt weniger Luft zur Verbrennung zur Verfügung steht.

Ebenfalls über die Kennfelder 31 für den fetten Motorbetrieb kann die Motorregelung 23 über die Verbindungsleitung 37 den Stellantrieb 7 steuern. Um das Verbrennungsluftverhältnis zu reduzieren, bewirkt dabei der Stellantrieb 7 über sein Stellglied 6 ein Verstellen der Drosselklappe 5 dahingehend, daß die durch die Ansaugleitung 4 angesaugte Frischluft gedrosselt wird. Im Saugrohr 16, das sich an die Drosselstelle 3 anschließt, wird dadurch der Druck reduziert, während gleichzeitig das Spülgefälle zwischen Abgasgegendruck und Saugrohrdruck steigt. Dies hat bei einem gleichbleibenden Öffnungsquerschnitt des Ventils 17 der Abgasrückführungsleitung 15 einen vergrößerten Abgasdurchsatz, das heißt eine erhöhte Abgasrückführrate, zur Folge. Durch diese Maßnahme wird somit das Verbrennungsluftverhältnis Lambda verringert.

Das Spülgefälle kann auch dadurch verändert werden, daß der Turbineneintrittsquerschnitt des Abgasturboladers 1 und/oder die durch die Turbine durchströmende Abgasmenge verändert wird. Eine derartige Veränderung kann durch die entsprechenden Kennfelder 31 über die Motorregelung 23 mittels der Verbindungsleitung 34 ausgelöst werden, wobei der Stellantrieb 22 das Stellglied 21 in der entsprechenden Weise betätigt.

Bei den vorgenannten Möglichkeiten zur Beeinflussung der Zusammensetzung der Luftzufuhr wird das Spülgefälle zwischen Abgasgegendruck und Saugrohrdruck verändert, wodurch sich die Abgasrückführrate variieren läßt, ohne das dazu der Abgasrückführventilöffnungsquerschnitt verändert werden muß. Eine Veränderung der Zusammensetzung der der Verbrennung zugeführten Luft kann auch durch eine Veränderung des Abgasrückführventilöffnungsquerschnittes erzielt werden. Zu diesem Zweck bewirkt ein entsprechendes Kennfeld 31, daß die Motorregelung 23 über die Verbindungsleitung 36 den Stellantrieb 19 entsprechend ansteuert. Der Stellantrieb 19 bewirkt dabei über sein Stellglied 18 die gewünschte Verstellung des Ventils 17.

## Patentansprüche

1. Verfahren zum Betreiben eines Dieselmotors (10) mit einer Motorregelung (23), die einen Rechner (28), und eine mit dem Rechner (28) kommunizierende Sensorik (26) umfasst, wobei
- die Motorregelung (23) in Abhängigkeit von Kennfeldern (30 und 31) den Betrieb des Dieselmotors (10) regelt und eine Umschaltung von einem Mager-Betrieb des Dieselmotors (10) auf einen Fett-Betrieb ermöglicht, wobei
- der Rechner (28) in Abhängigkeit von vorbestimmten Umschaltkriterien (33) ein Umschalten auf den Mager-Betrieb oder den Fett-Betrieb bewirkt und
- die Sensorik (26) die für Umschaltkriterien (33) notwendigen Parameter überwacht,
**dadurch gekennzeichnet, dass**
- in einem mit dem Rechner (28) kommunizierenden Speicher (29) der Motorregelung (23) für den Mager-Betrieb und den Fett-Betrieb separate Kennfelder (30 und 31) für den Betrieb des Dieselmotors (10) gespeichert sind und
- die Kennfelder (31) für den Fett-Betrieb so gewählt sind, dass nach einer Kraftstoff-Haupteinspritzung eine Kraftstoff-Nacheinspritzung erfolgt, derart, dass in dem jeweiligen Brennraum im wesentlichen ein Cracken oder Verdampfen des nacheingespritzten Kraftstoffs erfolgt.

2. Verfahren nach Anspruch 1,
**dadurch gekennzeichnet, dass**
die Kennfelder für den Fett-Betrieb so gewählt sind, dass im Vergleich zum Mager-Betrieb die Treibstoff-Verbrennung in jedem der Brennräume des Dieselmotors erst relativ weit nach dem oberen Totpunkt des jeweiligen Kolbens stattfindet.

3. Verfahren nach Anspruch 2,
**dadurch gekennzeichnet,**
**daß** im Vergleich zum Mager-Betrieb der Zeitpunkt der Kraftstoff-Haupteinspritzung relativ spät gewählt ist und/oder der Einspritzdruck reduziert ist und/oder die Einspritzdauer verlängert ist und/oder die Einspritzmenge vergrößert ist.

4. Verfahren nach einem der Ansprüche 2 oder 3,
**dadurch gekennzeichnet,**
**daß** vor der Haupteinspritzung eine Voreinspritzung erfolgt, die im Vergleich zum Mager-Betrieb einen veränderten Einspritzbeginn und/oder eine veränderte Einspritzdauer aufweist.

5. Verfahren nach Anspruch 4,
**dadurch gekennzeichnet,**
**daß** die Voreinspritzung hinsichtlich ihres Einspritzbeginns und/oder ihrer Einspritzdauer auf die im Vergleich zum Mager-Betrieb verzögerte Treibstoff-Verbrennung abgestimmt ist, derart, daß ein gleichmäßiger Motorlauf gewährleistet ist.

6. Verfahren nach Anspruch 1,
**dadurch gekennzeichnet,**
**daß** die Kennfelder (31) für den Fett-Betrieb des Dieselmotors (10) so gewählt sind, daß im Vergleich zum Mager-Betrieb der Zeitpunkt für den Beginn der Kraftstoff-Haupteinspritzung derart spät gewählt ist, daß sich bei einer Abgasrückführung (15) mit relativ hoher Rückführungsrate eine Vorgemischverbrennung einstellt.

7. Verfahren nach Anspruch 1,
**dadurch gekennzeichnet,**
**daß** die Kennfelder (31) für den Fett-Betrieb des Dieselmotors (10) so gewählt sind, daß im Vergleich zum Mager-Betrieb die Vorgemischverbrennung zu einem relativ weit vor dem oberen Totpunkt des jeweiligen Kolbens stattfindet.

8. Verfahren nach Anspruch 7,
**dadurch gekennzeichnet,**
**daß** im Vergleich zum Mager-Betrieb der Zeitpunkt der Kraftstoff-Voreinspritzung relativ früh gewählt ist.

9. Verfahren nach einem der vorhergehenden Ansprüche,
**dadurch gekennzeichnet,**
**daß** die Kennfelder (31 für den Fett-Betrieb des Dieselmotors (10) so gewählt sind, daß im Vergleich zum Mager-Betrieb für den Lufteinlaß in die einzelnen Brennräume vorgesehene Querschnitte gedrosselt werden.

10. Verfahren nach Anspruch 9,
**dadurch gekennzeichnet,**
**daß** zum Drosseln der Lufteinlaßquerschnitte für jeden Zylinder des Dieselmotors (10) eine in dessen Ansaugbereich (9) angeordnete Drosselklappe (11) über ein Stellglied (12) von einem hilfskraftbetätigten Stellantrieb (13) in Abhängigkeit von Signalen der Motorregelung (23) gesteuert betätigbar ist.

11. Verfahren nach einem der vorhergehenden Ansprüchen,
**dadurch gekennzeichnet,**
**daß** die Kennfelder (31) für den Fett-Betrieb des Dieselmotors (10) so gewählt sind, daß die Druckdifferenz - Spülgefälle- zwischen dem Druck der Gase nach der Verbrennung -Abgasgegendruck- und dem Druck der Gase vor der Verbrennung -Saugrohrdruck- erhöht wird.

12. Verfahren nach Anspruch 11,
**dadurch gekennzeichnet,**
**daß** bei einem Dieselmotor (10) mit Abgasrückführung (15) der Querschnitt der Frischluftzuführung (4) vor der Anschlußstelle der Abgasrückführung (15) an die Luftzuführung (4) zum Saugrohr (16) gedrosselt wird.

13. Verfahren nach Anspruch 12,
**dadurch gekennzeichnet,**
**daß** in der Frischluftzuführung (4) wenigstens eine vor der Anschlußstelle der Abgasrückführung (15) angeordnete Drosselklappe (5) über ein Stellglied (6) von einem hilfskraft-betätigten Stellantrieb (7) in Abhängigkeit von Signalen der Motorregelung (23) gesteuert betätigbar ist.

14. Verfahren nach Anspruch 11,
**dadurch gekennzeichnet,**
**daß** bei einem Dieselmotor (10) mit einem Abgasturbolader (1) der Turbineneintrittsquerschnitt und/oder das Abgasdurchströmvolumen durch den Abgasturbolader (1) verkleinert wird.

15. Verfahren nach Anspruch 14,
**dadurch gekennzeichnet,**
**daß** zur Veränderung des Turbineneintrittsquerschnittes und/oder des Abgasdurchströmvolumens ein Stellglied (21) von einem hilfskraftbetätigten Stellantrieb (22) in Abhängigkeit von Signalen der Motorregelung (23) gesteuert betätigbar ist.

## Claims

1. Method for operating a diesel engine (10) with an engine regulating unit (23) which comprises a computer (28) and a sensor system (26) communicating with the computer (28) wherein
- the engine regulating unit (23) regulates the operation of the diesel engine (10) in dependence upon characteristic fields (30 and 31) and facilitates a changeover from lean operation of the diesel engine (10) to rich operation wherein
- the computer (28) effects a changeover to lean operation or rich operation in dependence upon predetermined changeover criteria (33) and the sensor system (26) monitors the parameters necessary for changeover criteria (33),
**characterised in that**
separate characteristic fields (30 and 31) for lean operation and rich operation are stored in a storage device (29) of the engine regulating unit (23) communicating with the computer (28) for the operation of the diesel engine (10) and the characteristic fields (31) are selected for rich operation in such a way that after a main fuel injection a subsequent fuel injection takes place in such a way that essentially cracking or vaporisation of the subsequently injected fuel takes place in the respective combustion chamber.

2. Method according to claim 1,
**characterised in that**
the characteristic fields for rich operation are selected in such a way that in comparison with lean operation the fuel combustion in each of the combustion chambers of the diesel engine only takes place relatively far after top dead centre of the respective piston.

3. Method according to claim 2,
**characterised in that**
in comparison with lean operation the timing of the main fuel injection is selected as relatively late and / or the injection pressure is reduced and / or the injection duration is extended and / or the injection amount is increased.

4. Method according to one of the claims 2 or 3,
**characterised in that**
before the main injection a pre-injection takes place which has a modified injection start and / or a modified injection duration in comparison with lean operation.

5. Method according to claim 4,
**characterised in that**
the pre-injection is oriented, with regard to its injection start and / or its injection duration, to the fuel injection which is delayed in comparison with lean operation so that steady running of the engine is guaranteed.

6. Method according to claim 1,
**characterised in that**
the characteristic fields (31) for rich operation of the diesel engine (10) are selected so that the timing for the start of the main fuel injection is selected as late in comparison with lean operation, so that premix combustion is effected in the case of exhaust gas recirculation (15) with a relatively high recirculation rate.

7. Method according to claim 1,
**characterised in that**
the characteristic fields (31) for rich operation of the diesel engine (10) are selected in such a way that in comparison with lean operation the premix combustion takes place relatively far before top dead centre of the respective piston.

8. Method according to claim 7,
**characterised in that**
the timing of the fuel pre-injection is selected as relatively early in comparison with lean operation.

9. Method according to one of the preceding claims,
**characterised in that**
the characteristic fields (31) for rich operation of the diesel engine (10) are selected in such a way that in comparison with lean operation cross-sections provided for the air inlet into the individual combustion chambers are throttled.

10. Method according to claim 9,
**characterised in that**
for the purpose of throttling the air inlet cross-sections for each cylinder of the diesel engine (10) a throttle valve (11) arranged in its suction area (9) is adapted to be actuated in a controlled way via an actuating member by an actuating drive (13) actuated by auxiliary force (13) in dependence upon signals of the engine regulating unit (23).

11. Method according to one of the preceding claims,
**characterised in that**
the characteristic fields (31) for rich operation of the diesel engine (10) are selected so that the pressure differential - scavenging difference - between the pressure of the gases after combustion - exhaust gas back pressure - and the pressure of the gases before combustion - suction pipe pressure - is increased.

12. Method according to claim 11,
**characterised in that**
in the case of a diesel engine (10) with exhaust gas recirculation (15) the cross-section of the fresh air supply pipe (4) before the connection point of the exhaust gas recirculation (15) to the air supply pipe is throttled to the suction pipe (16).

13. Method according to claim 12,
**characterised in that**
in the fresh air supply pipe (4) at least one throttle valve (5) arranged before the connection point of the exhaust gas recirculation (15) is adapted to be actuated in a controlled way via an actuating member (6) by an actuating drive (7) actuated by auxiliary force in dependence upon signals of the engine regulating unit (23).

14. Method according to claim 11,
**characterised in that**
in the case of a diesel engine (10) with an exhaust gas turbocharger (1) the turbine inlet cross-section and / or the exhaust gas flow volume through the exhaust gas turbocharger (1) is / are reduced.

15. Method according to claim 14,
**characterised in that**
an actuating member (21) can be actuated in a controlled way by an actuating drive (22) actuated by auxiliary force in dependence upon signals of the engine regulating unit (23) in order to change the turbine inlet cross-section and / or the exhaust gas flow volume.

## Revendications

1. Procédé pour le service d'un moteur Diesel (10) avec une régulation de moteur (23), laquelle comprend un calculateur (28) et un domaine de capteurs (26) communiquant avec le calculateur (28), où
- la régulation de moteur (23) régule le service du moteur Diesel (10) en fonction de diagrammes caractéristiques (30 et 31) et permet une commutation d'un mode de service à combustion maigre du moteur Diesel (10) vers un mode de service à combustion riche,
- le calculateur (28) provoquant une commutation vers le mode de service à combustion maigre ou le mode de service à combustion riche en fonction de critères de commutation (33) définis, et
- le domaine de capteurs (26) surveillant les paramètres exigés pour les critères de commutation (33),
**caractérisé en ce que**
- des diagrammes caractéristiques (30 et 31) distincts pour le mode de service à combustion maigre et le mode de service à combustion riche du moteur Diesel (10) sont mémorisés dans une mémoire (29) de la régulation de moteur (23) communiquant avec le calculateur (28), et **en ce que** les diagrammes caractéristiques (31) pour le mode de service à combustion riche sont sélectionnés de manière à produire une post-injection de carburant consécutive à une injection principale, si bien que le carburant post-injecté est essentiellement craqué ou volatilisé dans la chambre de combustion respective.

2. Procédé selon la revendication 1,
**caractérisé en ce que**
les diagrammes caractéristiques pour le mode de service à combustion riche sont sélectionnés de manière à ce que la combustion du carburant dans chacune des chambres de combustion du moteur Diesel ne se produise que relativement longtemps après le point mort haut du piston respectif, comparativement au mode de service à combustion maigre.

3. Procédé selon la revendication 2,
**caractérisé en ce que**
comparativement au mode de service à combustion maigre, le moment de l'injection principale de carburant est choisi relativement tard, et/ou la pression d'injection est réduite, et/ou la durée d'injection est prolongée, et/ou le débit d'injection accru.

4. Procédé selon l'une des revendications 2 ou 3,
**caractérisé en ce**
**qu'**une pré-injection a lieu avant l'injection principale, laquelle présente un début d'injection modifié et/ou une durée d'injection modifiée comparativement au mode de service à combustion maigre.

5. Procédé selon la revendication 4,
**caractérisé en ce que**
la pré-injection est adaptée par son début d'injection et/ou sa durée d'injection à la combustion de carburant retardée comparativement au mode de service à combustion maigre, de manière à assurer une marche régulière du moteur.

6. Procédé selon la revendication 1,
**caractérisé en ce que**
les diagrammes caractéristiques (31) pour le mode de service à combustion riche du moteur Diesel (10) sont sélectionnés de manière à ce que, comparativement au mode de service à combustion maigre, le moment du début de l'injection principale de carburant soit choisi relativement tard, pour qu'une combustion à pré-mélange se produise lors d'une reconduction des gaz d'échappement (15) à débit de reconduction relativement élevé.

7. Procédé selon la revendication 1,
**caractérisé en ce que**
les diagrammes caractéristiques (31) pour le mode de service à combustion riche du moteur Diesel (10) sont sélectionnés de manière à ce que, comparativement au mode de service à combustion maigre, la combustion à pré-mélange se produise relativement longtemps avant le point mort haut du piston respectif.

8. Procédé selon la revendication 7,
**caractérisé en ce que**
le moment de le pré-injection de carburant est choisi relativement tôt comparativement au mode de service à combustion maigre.

9. Procédé selon l'une des revendications précédentes,
**caractérisé en ce que**
les diagrammes caractéristiques (31) pour le mode de service à combustion riche du moteur Diesel (10) sont sélectionnés de manière à ce que, comparativement au mode de service à combustion maigre, des sections prévues sont étranglées pour l'admission d'air dans les différentes chambres de combustion.

10. Procédé selon la revendication 9,
**caractérisé en ce que**
pour l'étranglement des sections d'admission d'air pour chaque cylindre du moteur Diesel (10), un papillon (11) disposé dans la zone d'aspiration (9) de celui-ci est actionnable via un composant de réglage (12) par un actionneur (13) manoeuvré par dispositif d'assistance, en fonction de signaux de la régulation de moteur (23).

11. Procédé selon l'une des revendications précédentes,
**caractérisé en ce que**
les diagrammes caractéristiques (31) pour le mode de service à combustion riche du moteur Diesel (10) sont sélectionnés de manière à augmenter le différentiel de pression - gradient de balayage - entre la pression des gaz après combustion - contre-pression des gaz d'échappement - et la pression des gaz avant combustion - pression de conduit d'admission.

12. Procédé selon la revendication 11,
**caractérisé en ce que**
dans un moteur Diesel (10) à reconduction des gaz d'échappement (15), la section de l'amenée d'air frais (4) est étranglée avant le point de raccordement de la reconduction des gaz d'échappement (15) à l'amenée d'air frais (4) vers le conduit d'aspiration (16).

13. Procédé selon la revendication 12,
**caractérisé en ce que**
dans l'amenée d'air frais (4), au moins un papillon (5) disposé en amont du point de raccordement de la reconduction des gaz d'échappement (15) est actionnable via un composant de réglage (6) par un actionneur (7) manoeuvré par dispositif d'assistance, en fonction de signaux de la régulation de moteur (23).

14. Procédé selon la revendication 11,
**caractérisé en ce que**
dans un moteur Diesel (10) à turbocompresseur à gaz d'échappement (1), la section d'entrée de turbine et/ou le débit des gaz d'échappement sont réduits par le turbocompresseur à gaz d'échappement (1).

15. Procédé selon la revendication 14,
**caractérisé en ce que,**
pour la variation de la section d'entrée de turbine, un composant de réglage (21) est actionnable par un actionneur (22) manoeuvré par dispositif d'assistance en fonction de signaux de la régulation de moteur (23).
